# EUROPÄISCHE PATENTANMELDUNG

(11) **EP 2 218 610 A1**
(43) Veröffentlichungstag der Anmeldung: **18.08.2010**
(21) Anmeldenummer: 10152373.6
(22) Anmeldetag: 02.02.2010
(51) Int. Cl.: B60Q 3/04, B60R 13/02

(54) **Perforierte Furniere**

(30) Priorität: 04.02.2009 DE 102009007336
(71) Anmelder: Lisa Dräxlmaier GmbH, 84137 Vilsbiburg (DE)
(72) Erfinder: Rüter, Dr. Karsten, 84032, Landshut (DE); Kreis, Dr. Raimund, 84137, Vilsbiburg (DE); Steckel, Michael, 84137, Vilsbiburg (DE); Heymann, Daniel, 96515, Sonneberg (DE); Schlemmer, Christian, 84034, Landshut (DE)
(74) Vertreter: HOFFMANN EITLE

(57) **Zusammenfassung**

Interieurteil insbesondere für Fahrzeuge, mit einem Furnier (1), das mit einem Perforationsbereich versehen ist, wodurch Öffnungen (5) so in dem Furnier (1) ausgebildet sind, dass bei einer Hinterleuchtung des Furniers (1) zumindest ein erleuchteter Abschnitt auf dem Furnier (1) erkennbar ist.

## Beschreibung

### GEGENSTAND DER ERFINDUNG

Die vorliegende Erfindung betrifft ein Interieurteil, insbesondere für Fahrzeuge mit einem Furnier.

### STAND DER TECHNIK

In aktuellen Fahrzeugen überwiegen bei den Bedienelementen klassische Drucktaster und Schalter. Es ist jedoch ein Trend zu oberflächenintegrierten Sensorschaltern zu erkennen, wodurch sich neue Oberflächengestaltungsmöglichkeiten realisieren lassen. Beispielsweise lassen sich Bedienelemente und/oder Anzeigen, Symbole usw. verstecken, d.h. sie sind sichtbar, wenn es gewünscht oder erforderlich ist, andernfalls sind sie unsichtbar. Ein solcher "Verschwindeeffekt" kann bei homogenen technischen Oberflächen relativ einfach durch diffus transluzente Sichtflächen erreicht werden. Das Zierteil mit Symbolik wird beispielsweise mit einem Lack, einer Folie oder einer Kunststoffplatte abgedeckt.

Insbesondere Fahrzeuge im Premiumsegment, die für einen Verschwindeeffekt zuerst infrage kommen, verfügen heute oft über eine Ausstattung, in der natürliche Werkstoffe, wie beispielsweise Leder oder Furnieroberflächen verwendet werden. Es ist daher notwendig und auch gestalterisch reizvoll, diese natürlichen Werkstoffe mit technischen Funktionen zu kombinieren, beispielsweise ein Furnierzierteil mit Schaltern auszustatten, die erst dann sichtbar werden, wenn es gewünscht oder notwendig ist. Im nicht sichtbaren Zustand der Funktionselemente soll die Oberfläche homogen erscheinen, d.h. ihre natürliche Oberflächenbeschaffenheit aufweisen.

### ZUSAMMENFASSUNG DER ERFINDUNG

Es ist daher Aufgabe der Erfindung, eine Interieurkomponente mit einem Furnier bereit zu stellen, auf dem sich Symbole und/oder Funktionselemente darstellen lassen, die nur bei Bedarf sichtbar sind und die homogene Erscheinung des Furniers im anderen Falle nicht stören.

Die Aufgabe wird mit einem Interieurteil gemäß Anspruch 1 gelöst. Vorteilhafte Ausgestaltungen folgen aus den Unteransprüchen.

Erfindungsgemäß weist das Interieurteil ein Furnier auf, das mit einem Perforationsbereich versehen ist, wodurch Öffnungen in dem Furnier ausgebildet sind. Die Perforation ist so, dass bei einer Hinterleuchtung des Furniers erleuchtete Abschnitte auf der Sichtseite des Furniers erscheinen. Vorzugsweise sind die Öffnungen bei einer fehlenden Hinterleuchtung im Wesentlichen unsichtbar. Der Perforationsbereich bezeichnet einen Abschnitt des Furniers, in dem Öffnungen vorzugsweise so ausgebildet sind, dass sich eine Symbolik abzeichnet, wenn das Furnier hinterleuchtet wird. Damit die Perforation im unbeleuchteten Zustand nicht erkennbar ist, sollte sie nicht aus geschlossenen Linienzügen bestehen. Diese heben sich von der Maserung des Furniers ab. Die Perforation ist so ausgebildet, dass die Öffnungen in einem nicht hinterleuchteten Zustand des Furniers nicht oder kaum sichtbar sind. Dazu können die Öffnungen der Perforation als Sacklöcher ausgebildet sein, so dass die Öffnungen das Furnier nicht vollständig durchlaufen. Hierzu muss die Transparenz der Restwandstärke eine Durchleuchtung der Öffnungen ermöglichen. Die Tiefe der Öffnungen ist ein Parameter, um Lichteigenschaften, wie Farbe, Intensität und dergleichen des durchscheinenden Lichts zu beeinflussen.

Insbesondere bieten sich Öffnungen mit einer gewissen Tiefe an, um die Stabilität bzw. Strukturfestigkeit des Furniers und die Verarbeitbarkeit zu wahren, eine Hinterleuchtung bzw. Durchleuchtung zu ermöglichen und gleichzeitig die sichtbare Furnieroberfläche mechanisch nicht zu beeinflussen. Unter Stabilität der Dekorschicht ist insbesondere die strukturelle Festigkeit und Elastizität zu verstehen.

In vielen Fällen wird es allerdings aus verschiedensten Gründen (Herstellungsverfahren, mangelhafte Transparenz der Restwandstärke, durch die Furnieroberfläche beeinflusster Farbeindruck bei Hinterleuchtung usw.) notwendig sein, dass die Öffnungen der Perforation Durchgangsöffnungen sind und somit das Furnier vollständig durchlaufen. Um dennoch eine homogene Erscheinung des Furniers bei fehlender Hinterleuchtung zu gewährleisten, weisen die Öffnungen des Perforationsbereichs vorzugsweise einen Durchmesser von weniger als 100 µm auf. Besonders bevorzugt sind Durchmesser, die kleiner oder gleich dem Durchmesser der Tracheen (Poren) der jeweiligen Holzart sind. Bei einem nicht hinterleuchteten Zustand sind Öffnungen dieser Größenordnung nicht mehr erkennbar.

Vorzugsweise weisen die Öffnungen des Perforationsbereichs einen Abstand von 0,1 bis 0,7 mm, noch bevorzugter 0,3 mm, auf. Bei einem geringen Abstand der Öffnungen zueinander, lässt sich die Überstrahlung bei einer Hinterleuchtung vorteilhaft ausnutzen, so dass eine möglicherweise darzustellende Symbolik nicht oder nur gering gerastert erscheint.

Vorzugsweise weist das Furnier eine Sichtseite auf, auf der eine Deckschicht, beispielsweise aus Klarlack oder einer transparenten Folie, vorgesehen ist. Mit einer solchen Zusatzschicht können sich die Öffnungen im Furnier nicht mit Schmutz- oder sonstigen Partikeln zusetzen, so dass eine Durchleuchtbarkeit dauerhaft erhalten bleibt.

Zur Anpassung des optischen Eindrucks kann die Lackschicht oder Deckschicht farbig oder auf andere Weise Licht beeinflussend, beispielsweise Licht streuend, sein. Mit einer Lichtstreuung kann eine diffuse Wirkung des hinterleuchteten perforierten Furniers erreicht werden. Insbesondere kann somit gewährleistet werden, dass die Hinterleuchtung in einem großen Blickwinkelbereich gut erkennbar ist.

Vorzugsweise weist das Furnier eine Dicke von 0,3 bis 0,6 mm auf. Mit einer geringen Dicke kann die Blickwinkelabhängigkeit bei der Sichtbarkeit der durchleuchteten Symbole vermindert werden. Andere Maßnahmen, die zur Verbesserung der Blickwinkelabhängigkeit getroffen werden können, sind weiter unten beschrieben.

Vorzugsweise ist auf der der Sichtseite des Furniers abgewandten Seite eine Licht reflektierende oder Licht absorbierende Schicht vorgesehen. Die Licht reflektierende oder Licht absorbierende Schicht muss nicht direkt auf dem Furnier aufgebracht sein Es können transparente, Haptik- und/oder andere Schichten dazwischen vorgesehen sein.

Vorzugsweise erfolgt die Anordnung der Öffnungen der Perforation so, dass beim Durchscheinen des Furniers ein oder mehrere Symbole, Zeichen oder dergleichen sichtbar sind. In der Ausgestaltung eines Fahrzeuginnenraums wird ein optimaler Kompromiss aus hochwertigen, homogenen und klar strukturierten Oberflächen verschiedener Elemente, wie beispielsweise Instrumententafel und Türinnenverkleidung, und einer Darstellung von Informationen, beispielsweise den Fahrzeugzustand betreffend, und Funktionselementen angestrebt. Bestimmte Anzeigen oder Funktionselemente sollen daher nur bei Bedarf sichtbar sein. Andernfalls sollen sie verborgen sein. Üblicherweise werden Informationen über Symbole, wie beispielsweise Schriftzeichen, Zahlen und dergleichen, dargestellt, so dass das Verbergen solcher Symbole in dem Fall, in dem sie nicht angezeigt werden sollen, besonders wünschenswert ist. Durch die geringe Größe, den geringen Abstand und die hohe Anzahl der Öffnungen kann der optische Eindruck eines gleichmäßig beleuchteten Abschnitts vermittelt werden.

Vorzugsweise ist auf der der Sichtseite des Furniers abgewandten Seite eine Leuchtquelle vorgesehen. Die Leuchtquelle dient zur Hinterleuchtung bzw. Durchleuchtung des Furniers. Die Leuchtquelle kann dazu vorzugsweise eine EL-Folie oder eine Leuchtquelle mit einer oder mehreren LEDs sein. Die Leuchtquelle kann Teil eines Verbunds mit dem Furnier sein. Neben der Leuchtquelle können auf der der Sichtseite des Furniers abgewandten Seite weitere Funktionselemente, wie beispielsweise Drucksensoren, Schalter oder dergleichen vorgesehen sein, um das Furnier mit oberflächenintegrierten Funktionselementen, wie beispielsweise Sensorschaltern, zu versehen.

Für den Fall, dass durch erfindungsgemäße Öffnungen ein Teil einer Ambientebeleuchtung geschaffen werden soll, werden die Öffnungen in den Bereichen eines Interieurteils, wie beispielsweise Instrumententafel oder Türinnenverkleidung, eingebracht, die bei fehlendem Tageslicht beleuchtet werden können. Bei Tageslicht sind die erfindungsgemäßen Öffnungen nicht sichtbar. Damit ergibt sich die Möglichkeit, eine unabhängig von der bei Tageslicht sichtbaren Kontur der Elemente eine Ambientebeleuchtung zu realisieren. Durch die geringe Größe, den geringen Abstand und die hohe Anzahl der Öffnungen kann der optische Eindruck einer gleichmäßig beleuchteten Fläche vermittelt werden.

Vorzugsweise weist das Interieurteil zusätzlich eine Trägerschicht auf, die auf der Seite der Lichtquelle vorgesehen ist. Die Trägerschicht kann beispielsweise ein Blindfurnier oder einen formstabilen Träger umfassen, um die Weiterverarbeitbarkeit des Interieurteils zu vereinfachen, die Stabilität zu verbessern oder um die Lichtquelle aufzunehmen.

Vorzugsweise ist ein Schalter vorgesehen, der seinen Zustand ändert, wenn eine Kraft auf einen Teil des Interieurteils, vorzugsweise auf den perforierten Bereicht, aufgebracht wird. Um eine Verbindung von einer reinen Informationsdarstellung hin zu einer Kombination aus Informationsdarstellung und Funktionselement herzustellen, kann ein Schalter vorgesehen sein. Dieser Schalter kann beispielsweise ein Piezoschaltelement, ein mechanischer Schalter oder ein elektromagnetischer Schalter sein. Die Informationsdarstellung und der Zustand des Schalters können, müssen aber nicht, gekoppelt sein. Als ein Beispiel seien hier die Anzeige und der Schalter einer Warnblinkanlage genannt, die durch Drücken eines beleuchteten Warnblinkanlagensymbols aktiviert wird, woraufhin die permanente Hinterleuchtung in eine blinkende Hinterleuchtung geändert wird.

Vorzugsweise sind wenigstens zwei Lichtquellen so vorhanden, so dass ein Farb- und/oder Intensitätsumschlag des durchscheinenden Lichts ermöglicht wird, um somit beispielsweise verschiedene Zustände eines Schalters, des Fahrzeugs oder dergleichen anzuzeigen.

Wenn eine Deckschicht vorgesehen ist, weist diese vorzugsweise zumindest einen Streuabschnitt auf, der den Streuungsgrad der Deckschicht lokal vergrößert. An dem Streuabschnitt oder den Streuabschnitten wird das durchscheinende Licht stärker gestreut als an den verbleibenden Abschnitten der Deckschicht. Ein großer Streuungsgrad eines Abschnitts oder eines Materials misst sich nach dem Vermögen, einfallendes Licht in einem relevanten Raumwinkelbereich möglichst gleichmäßig in die verschiedenen Raumwinkel abzugeben.

Der zumindest eine Streuabschnitt ist vorzugsweise zumindest einer Öffnung der Perforation zugeordnet. Licht, das durch die Öffnungen der Perforation tritt, tritt nahezu senkrecht zur Dekorschicht aus den Öffnungen heraus. Dieser Effekt verstärkt sich mit kleiner werdenden Öffnungsdurchmessern. Mit dem Bereitstellen eines oder mehrerer Streuabschnitte, wird das im Wesentlichen senkrecht austretende Licht gestreut. Dadurch wird die Betrachtungswinkelabhängigkeit des optischen Eindrucks bei Hinterleuchtung vermindert. Insbesondere ist die optische Wirkung, die sich bei einer Hinterleuchtung ergibt, auch bei schrägen Betrachtungswinkeln vorhanden. Die Deckschicht, die ursprünglich unter anderem zum Schutz der Dekorschicht vorgesehen ist, erhält danach ferner eine Streufunktion. Indem die Streuabschnitte einer oder mehreren Öffnungen zugeordnet sind und für eine lokale Streuwirkung sorgen, ist das homogene Erscheinungsbild der Dekorschicht gewährleistet. Durch die lokale strukturelle Veränderung der Deckschicht ist gewährleistet, dass eine Streuung gezielt dort stattfindet, wo sie erforderlich ist, und die Deckschicht im Übrigen unverändert bleiben kann. Die Streuabschnitte können so ausgebildet sein, dass die optische Erscheinung des Gesamtverbundes durch die Streuabschnitte kaum verändert wird.

Vorzugsweise ist jedem Streuabschnitt genau eine Öffnung so zugeordnet, dass der Streuabschnitt in der Umgebung der Öffnung, vorzugweise im Bereich der axialen Verlängerung der Öffnung, vorgesehen ist. Eine räumliche eins-zu-eins Zuordnung der Streuabschnitte und der Öffnungen vereinfacht einerseits die Herstellung des Interieurteils, da die Streuabschnitte im Wesentlichen gleichzeitig mit den Öffnungen ausgebildet werden können, zum anderen kann die Streuwirkung gezielt dort erzeugt werden, wo sie erwünscht ist. Wenn die Streuabschnitte jeweils in der axialen Verlängerung der Öffnungen vorgesehen sind, kann das in erster Linie senkrecht aus den Öffnungen austretende Licht nahezu vollständig in einen Streuabschnitt eintreten, so dass die Streuwirkung optimiert werden kann.

Vorzugsweise umfasst der Streuabschnitt eine Aushöhlung in der zumindest einen Deckschicht. Die Aushöhlung kann die Form eines Sackloches, einer Kuppel, eines Kegels oder ähnliches aufweisen. Durch das Einbringen einer oder mehrerer Aushöhlungen in die Deckschicht werden Grenzflächen erzeugt, an denen das Licht gestreut wird. Auf diese Weise können mit einfachen Mitteln Streuabschnitte erzeugt werden. Die Einbringung von Streuabschnitten führt zu einem homogeneren Lichtbild bei gleichzeitig höherer Stabilität des Verbunds aus Deckschicht und Furnier. Die erhöhte Stabilität wird dadurch erreicht, dass bei einem mit Streuabschnitten versehenen Verbund für eine im Vergleich zu einem Verbund ohne Streuabschnitte identische Beleuchtung weniger Perforationen in die Dekorschicht eingebracht werden müssen.

Vorzugsweise ist die Aushöhlung an der Grenzfläche zur Deckschicht eingetrübt, wodurch die Streuwirkung verbessert wird.

Vorzugsweise ist die Aushöhlung zur Dekorseite der zumindest einen transparenten Schicht offen und zur Sichtseite der zumindest einen transparenten Schicht geschlossen. Dadurch kann die Herstellung der Perforation und der Streuabschnitte vereinfacht werden. Ferner werden die haptischen und funktionalen Oberflächeneigenschaften des Dekorverbunds (auf der Sichtseite) nicht verändert. Ein solcher Streuabschnitt kann beispielsweise halbkugelförmig, kuppelförmig, kegelförmig, fingerförmig, sacklochförmig usw. ausgebildet werden. Die Größe, die Geometrie und die Ausführungsart der Aushöhlung werden durch die Materialwahl und durch die Lasereinstellungen beeinflusst.

In eine oder mehrere Aushöhlungen und/oder in eine oder mehrere Öffnungen kann vorzugsweise ein Licht beeinflussendes Material, z.B. ein Fluid oder ein Gas eingebracht werden, wodurch die Streuwirkung verbessert bzw. verändert werden kann. Eine solche Ausführungsform kann mit oder ohne Deckschicht versehen sein. Das Licht beeinflussende Material kann einerseits gezielt in einzelne Öffnungen eingebracht werden, andererseits ist auch das komplette "Überfluten" eines größeren Bereichs denkbar. Zusätzlich kann bei einem mehrschichtigen Aufbau das Licht beeinflussende Material auch durch mehrere Schichten hindurch bzw. in mehrere Schichten hinein eingebracht werden. Gegebenenfall ist eine Vorbehandlung (Aufbringen einer Sperrschicht) einzelner Schichten erforderlich, so dass ein Aufquellen der Schichten vermieden werden kann. Das Licht beeinflussende Material zeichnet sich dadurch aus, dass es eine zumindest messbare Veränderung der Durchleuchtungseigenschaften, verglichen mit einer Dekorschicht, in der die Öffnungen nicht oder lediglich mit Luft gefüllt sind, aufweist. Eine Nachbehandlung der Öffnungen mittels eines solchen Licht beeinflussenden Materials ist in vielerlei Hinsicht vorteilhaft. Zum einen kann das Material eine Färbung und/oder Struktur aufweisen, welche die eingebrachten Öffnungen optisch versteckt, zum anderen kann dieses Material die Eigenschaften des ausgestrahlten Lichts verändern, beispielsweise die Färbung, die Intensität, die Streuung usw. Außerdem können einzelne Öffnungen oder verschiedene Bereiche der Perforation dadurch auf einfache Weise unterschiedliche optische Eigenschaften erhalten. Besondere Effekte lassen sich z.B. erzielen, wenn die eingebrachten Öffnungen eingefärbt werden, wobei die Einfärbung innerhalb der Öffnung auch nur partiell aufgebracht sein kann. Wenn im Randbereich der Öffnungen Oberflächenstörungen oder Haarrisse vorhanden sind, kann das Licht beeinflussende Material in diese eindiffundieren und so für eine zusätzliche optische Veränderung sorgen. Das Licht beeinflussende Material kann darüber hinaus auch elektrisch leitend sein, so dass zusätzlich eine elektrische Kontaktierung über das in die Öffnungen eingebrachte Material möglich ist.

Für weitere Details dazu wird auf die DE 10 2008 054 721 und die DE 10 2007 054 348 verwiesen.

Vorzugsweise werden das Furnier und/oder die Deckschicht mittels eines Laserverfahrens perforiert. Durch die häufige und vielseitige Anwendung von Lasern ist ein solches Verfahren kostengünstig durchzuführen. Ferner erlauben Laserverfahren eine große Perforationsgenauigkeit. Eine solche Genauigkeit ist wünschenswert, da durch die Feinheit der Öffnungen eine hohe Genauigkeit verlangt wird und um ferner die Schwächung des Materials zu minimieren. Andere Perforationsverfahren, wie beispielsweise Wasser-/Fluidverfahren, sind denkbar.

### KURZE BESCHREIBUNG DER ZEICHNUNGEN

Fig. 1 zeigt einen hinterleuchteten Verbund mit Furnier, gemäß einer Ausführungsform der vorliegenden Erfindung;
Fig. 2 zeigt schematisch den Querschnitt des aus Fig. 1 hinterleuchteten Verbunds;
Fig. 3 zeigt eine weitere Ausführungsform eines Verbunds mit Furnier gemäß der vorliegenden Erfindung.
Fig. 4A und Fig. 4B stellen Querschnitte eines Verbunds mit Furnier aus einer Furnierschicht mit einer Öffnung und einer Deckschicht mit einem Streuabschnitt dar.
Fig. 5 zeigt weitere Ausführungsformen eines Verbunds mit Furnier und einer Deckschicht mit Streuabschnitt.

### BEVORZUGTE AUSFÜHRUNGSFORMEN

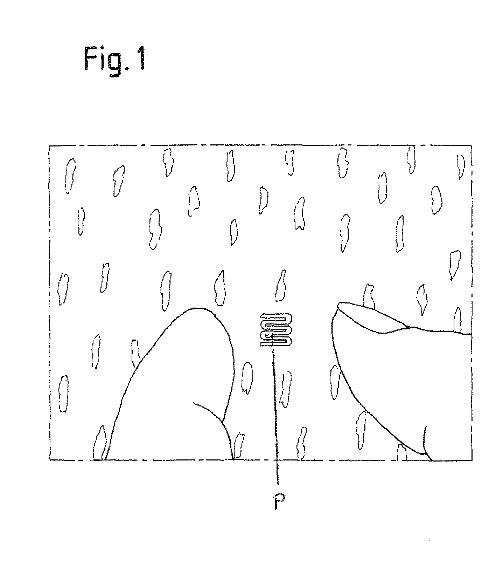

In Fig. 1 ist eine hinterleuchtete Verbundschicht mit einer Furnierschicht gezeigt, wie sie einem Betrachter beispielsweise in einem Fahrzeuginnenraum erscheinen kann. Aufgrund des geringen Durchmessers der Öffnungen eines Perforationsbereichs P sind einzelne Öffnungen der Perforation nicht zu erkennen, und es entsteht der Eindruck eines nahezu gleichmäßig leuchtenden Symbols.

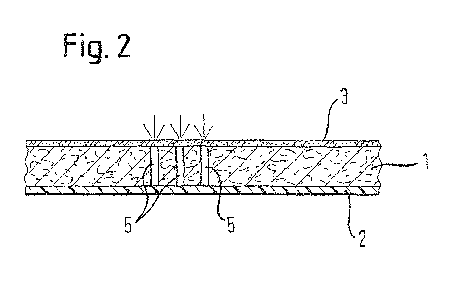

Fig. 2 zeigt den Querschnitt einer solchen Verbundschicht, wobei Referenzzeichen 1 eine perforierte Furnierschicht, Referenzzeichen 2 ein Leuchtmittel und Referenzzeichen 3 einen transparenten Lack bezeichnet.

Es wird zunächst ein Verbund aus der Furnierschicht 1 und dem transparenten Lack 3 hergestellt. Danach werden Öffnungen 5 in die Furnierschicht 1 eingebracht. Als Perforationsverfahren kommt hierbei Wasserstrahlen oder Lasern zum Einsatz.

In dieser Ausführungsform ist die Lichtquelle eine Leuchtfolie 2, die raumsparend als eine Schicht auf der dem transparenten Lack 3 abgewandten Seite auf der Furnierschicht 1 aufgebracht ist. Der transparente Lack 3 sorgt für einen Schutz der Furnierschicht 1, außerdem dafür, dass Schmutzteilchen oder dergleichen nicht in die Öffnungen 5 von der Fahrgastseite eindringen können und zum anderen für eine Streuwirkung des austretenden Lichts, um ein gleichmäßiges Erscheinungsbild der Beleuchtung zu verbessern.

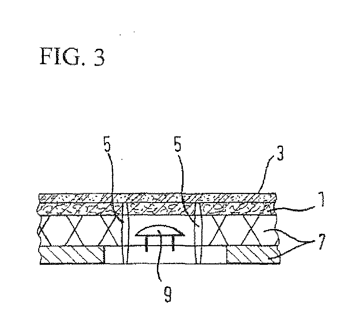

Fig. 3 zeigt eine Verbundschicht mit einer LED 9, die als eine Trägerschicht 7 ein Blindfurnier und einen formstabilen Träger aufweist, in das die LED 9 eingesteckt ist. Ferner weist die Verbundschicht eine Furnierschicht 1, eine transparente Deckschicht 3 und eine Laserperforierung 5 auf. Die Öffnungen werden nach der Verbundherstellung eingebracht und durchlaufen die Verbundschicht nicht vollständig. Im vorliegenden Fall wird zunächst ein Teilverbund aus dem formstabilem Träger, dem Blindfurnier und der Furnierschicht 1 hergestellt. Dieser Teilverbund wird gelasert, um Durchgangslöcher in den Teilverbund einzubringen. Anschließend wird die Oberfläche mit einem transparenten Lack 3 versiegelt.

Der Einbau der/des Leuchtmittel/Leuchtmittels in eine einzelne Materialschicht, in einen Teilverbund oder in einen Gesamtverbund kann vor oder nach der Laserbearbeitung erfolgen. Ein Teil- oder Gesamtverbund kann inklusive der Furnierschicht mit durchgehenden Öffnungen gelasert werden. Anschließend können die Öffnungen mit einer transparenten Beschichtung teilweise oder vollständig versiegelt werden.

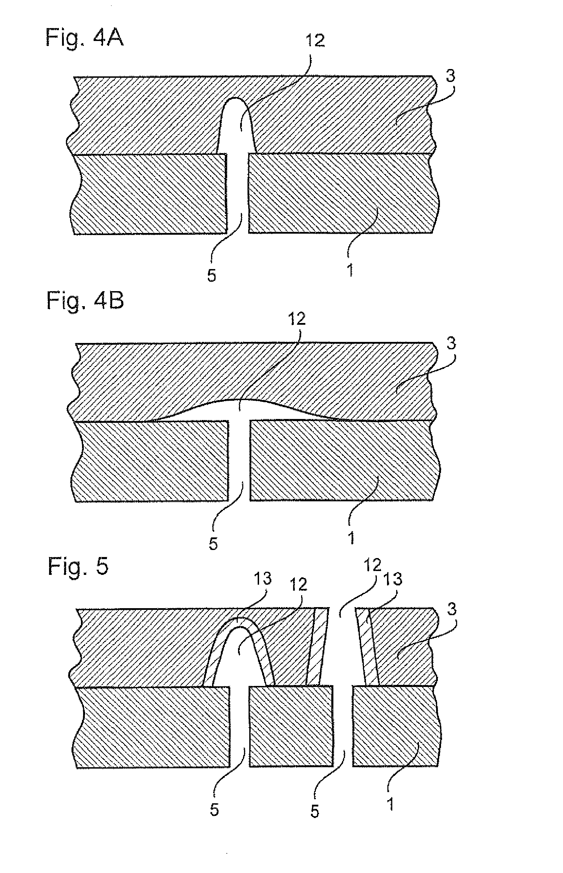

Fig. 4A stellt den Querschnitt eines Dekorverbunds aus einer Furnierschicht 1 und einer Deckschicht 3 dar. In die Furnierschicht 1 ist eine Öffnung 5 eingebracht, welche eine Öffnung der Perforation repräsentiert. In der axialen Verlängerung der Öffnung 5 ist in der Deckschicht 3 ein Streuabschnitt 12 ausgebildet. Der Streuabschnitt 12 weist eine kuppelförmige Gestalt auf und ist zur Dekorseite hin offen, so dass die Öffnung 5 und der Streuabschnitt 12 miteinander verbunden sind.

Die Deckschicht 3 kann aus PC, PUR, PMMA, TPO, COC, COP usw. hergestellt sein. Das Furnier kann lackiert werden, beispielsweise mit Klarlack z.B. auf PU-Basis. Alternativ kann die Deckschicht 3 aus einer transparenten Folie ausgebildet werden. Je nach Verfahren und Material kann zusätzlich ein Haftvermittler zur Herstellung des Verbunds verwendet werden. Anschließend wird der Verbund von der Rückseite her, d.h. von der der Sichtseite abgewandten Seite, perforiert. Der Verbund aus Furnierschicht und transparenter Schicht wird dafür beispielsweise gelasert. Der Laser kann so eingestellt sein und angesteuert werden, dass dieser sowohl die Öffnung 5 als auch den Streuabschnitt 12 herstellt.

Je größer die Öffnungen 5 sind, umso schwächer ist das Furnier an dieser Stelle, so dass die Gefahr von Rissbildung vor allem im Alterungsprozess besteht. Darüber hinaus besteht die Gefahr, dass sich bei der Laserung durch den Hitzeeintrag Schmauchspuren, Einfallstellen oder Aufwerfungen im Furnier bilden. Der Hitzeeintrag ist umso größer, je größer die Öffnungen 5 sind. Die Öffnungen 5 in der Furnierschicht sollen aus diesen Gründen und damit sie von der Sichtseite aus ohne Hinterleuchtung kaum zu erkennen sind, so klein wie möglich sein.

Gemäß der Fig. 4B kann der Streuabschnitt ohne oder nur mit geringem Materialabtrag der Deckschicht 3 ausgebildet werden. Dazu wird die transparente Deckschicht 3 von der Dekorschicht im Bereich der axialen Verlängerung der Öffnung 5 abgehoben. Ein solches Abheben kann durch Ausfüllen der Öffnung 5 mit einem Füllmaterial (nicht gezeigt in Fig. 4B), wie beispielsweise Farbe, einem Haftvermittler, einem Licht beeinflussenden Material usw., erreicht werden. Dadurch werden Nebenbereiche geflutet, wodurch die Streuwirkung angepasst werden kann. Das Füllmaterial kann zusätzlich Klebeeigenschaften aufweisen, um dadurch die Verbindung zwischen der Furnierschicht 1 und der Deckschicht 3 herzustellen oder zu verbessern. Auf diese Weise lässt sich ferner eine getrennte Verarbeitung der Furnierschicht 1 und der Deckschicht 3 erreichen. Die in der Furnierschicht ausgebildete Perforation lässt sich vorteilhaft zur Herstellung der Streuabschnitte 12 ausnutzen.

Fig. 5 zeigt in einer Figur zwei weitere mögliche Streuabschnitte 12. Hierbei weisen beide Streuabschnitte 12 an deren Grenzflächen eingetrübte Bereiche 13 zur Lichtstreuung auf. Die Aushöhlung 12 auf der linken Seite der Fig. 5 ähnelt einer Kuppel, die aufgrund der erzeugten Grenzflächen lichtstreuende Eigenschaften aufweist. Die Lichtstreuung wird zusätzlich verstärkt, indem neben der Aushöhlung 12 ein Randbereich eingetrübt wird, beispielsweise durch die Laserprozesswärme. Dieser Effekt zeigt sich beispielsweise bei einer PU-Schicht. Es gibt transparente Materialien, die diesen Effekt nicht zeigen. Die rechte Seite von Fig. 5 zeigt einen Streuabschnitt 12, der als Durchgangsöffnung ausgebildet ist. Unabhängig davon ist auch hier der Randbereich der Durchgangsöffnung 12 eingetrübt, um die Streuwirkung des Streuabschnitts 12 zu verbessern.

Der Fachmann entnimmt aus den Anmeldungen DE 10 2008 054 721, DE 10 2007 054 348, DE 10 2008 043 441, DE 10 2008 054 563, DE 10 2008 041 701 und DE 10 2008 060 389, die hierin vollumfänglich zu berücksichtigen sind, weitere Details und Merkmale, die für die vorliegende Erfindung vorteilhaft sind.

## Patentansprüche

1. Interieurteil insbesondere für Fahrzeuge, mit einem Furnier (1), das mit einem Perforationsbereich versehen ist, wodurch Öffnungen (5) so in dem Furnier (1) ausgebildet sind, dass bei einer Hinterleuchtung des Furniers (1) zumindest ein erleuchteter Abschnitt auf dem Furnier (1) erkennbar ist.

2. Interieurteil nach Anspruch 1, **dadurch gekennzeichnet, dass** die Öffnungen (5) der Perforation das Furnier (1) vollständig durchlaufen.

3. Interieurteil nach Anspruch 1 oder 2, **dadurch gekennzeichnet, dass** die Öffnungen (5) des Perforationsbereichs einen Durchmesser von weniger als 100 µm aufweisen.

4. Interieurteil nach einem der vorhergehenden Ansprüche, **dadurch gekennzeichnet, dass** die Öffnungen (5) des Perforationsbereichs in einem Abstand von 0,1 bis 0,7 mm angeordnet sind.

5. Interieurteil nach einem der vorhergehenden Ansprüche, **dadurch gekennzeichnet, dass** das Furnier (1) eine Sichtseite aufweist, auf der eine Deckschicht (3), vorzugsweise aus einem Klarlack oder einer Folie, vorgesehen ist.

6. Interieurteil nach Anspruch 5, **dadurch gekennzeichnet, dass** die Deckschicht (3) zumindest einen Streuabschnitt (12) aufweist, der den Streuungsgrad der Deckschicht (3) lokal vergrößert.

7. Interieurteil nach Anspruch 6, **dadurch gekennzeichnet, dass** der zumindest eine Streuabschnitt (12) zumindest einer Öffnung (5) der Perforation zugeordnet ist.

8. Interieurteil nach Anspruch 7, **dadurch gekennzeichnet, dass** jedem Streuabschnitt (12) genau eine Öffnung (5) so zugeordnet ist, dass der Streuabschnitt (12) in der Umgebung der Öffnung (5), vorzugweise im Bereich der axialen Verlängerung der Öffnung (5), vorgesehen ist.

9. Interieurteil nach Anspruch 8, **dadurch gekennzeichnet, dass** der Streuabschnitt (12) eine Aushöhlung, vorzugsweise in der Form eines Sackloches, einer Kuppel und/oder eines Kegels umfasst.

10. Interieurteil nach einem der vorhergehenden Ansprüche, **dadurch gekennzeichnet, dass** das Furnier (1) eine Dicke von 0,3 bis 0,6 mm aufweist.

11. Interieurteil nach einem der vorhergehenden Ansprüche, **dadurch gekennzeichnet, dass** auf der der Sichtseite des Furniers (1) abgewandten Seite eine Licht reflektierende oder Licht absorbierende Schicht vorgesehen ist.

12. Interieurteil nach einem der vorhergehenden Ansprüche, **dadurch gekennzeichnet, dass** der Perforationsbereich so mit Öffnungen (5) versehen ist, dass bei Hinterleuchtung des Furniers (1) eine Symbolik sichtbar ist.

13. Interieurteil nach einem der vorhergehenden Ansprüche, **dadurch gekennzeichnet, dass** auf der der Sichtseite des Furniers (1) abgewandten Seite eine Leuchtquelle (2, 9) vorgesehen ist.

14. Interieurteil nach Anspruch 13, **dadurch gekennzeichnet, dass** die Leuchtquelle (2, 9) eine EL-Folie oder eine Leuchtquelle mit einer oder mehreren LEDs ist.

## Geänderte Patentansprüche

### Geänderte Patentansprüche gemäss Regel 137(2) EPÜ.

**1.** Interieurteil insbesondere für Fahrzeuge, mit einem Furnier (1), das mit einem Perforationsbereich versehen ist, wodurch Öffnungen (5) so in dem Furnier (1) ausgebildet sind, dass bei einer Hinterleuchtung des Furniers (1) zumindest ein erleuchteter Abschnitt auf dem Furnier (1) erkennbar ist, **dadurch gekennzeichnet, dass**
die Öffnungen (5) bei einer fehlenden Hinterleuchtung im Wesentlichen unsichtbar sind.

**2.** Interieurteil nach Anspruch 1, **dadurch gekennzeichnet, dass** die Öffnungen (5) der Perforation das Furnier (1) vollständig durchlaufen.

**3.** Interieurteil nach Anspruch 1 oder 2, **dadurch gekennzeichnet, dass** die Öffnungen (5) des Perforationsbereichs einen Durchmesser von weniger als 100 µm aufweisen.

**4.** Interieurteil nach einem der vorhergehenden Ansprüche, **dadurch gekennzeichnet, dass** die Öffnungen (5) des Perforationsbereichs in einem Abstand von 0,1 bis 0,7 mm angeordnet sind.

**5.** Interieurteil nach einem der vorhergehenden Ansprüche, **dadurch gekennzeichnet, dass** das Furnier (1) eine Sichtseite aufweist, auf der eine Deckschicht (3), vorzugsweise aus einem Klarlack oder einer Folie, vorgesehen ist.

**6.** Interieurteil nach Anspruch 5, **dadurch gekennzeichnet, dass** die Deckschicht (3) zumindest einen Streuabschnitt (12) aufweist, der den Streuungsgrad der Deckschicht (3) lokal vergrößert.

**7.** Interieurteil nach Anspruch 6, **dadurch gekennzeichnet, dass** der zumindest eine Streuabschnitt (12) zumindest einer Öffnung (5) der Perforation zugeordnet ist.

**8.** Interieurteil nach Anspruch 7, **dadurch gekennzeichnet, dass** jedem Streuabschnitt (12) genau eine Öffnung (5) so zugeordnet ist, dass der Streuabschnitt (12) in der Umgebung der Öffnung (5), vorzugweise im Bereich der axialen Verlängerung der Öffnung (5), vorgesehen ist.

**9.** Interieurteil nach Anspruch 8, **dadurch gekennzeichnet, dass** der Streuabschnitt (12) eine Aushöhlung, vorzugsweise in der Form eines Sackloches, einer Kuppel und/oder eines Kegels umfasst.

**10.** Interieurteil nach einem der vorhergehenden Ansprüche, **dadurch gekennzeichnet, dass** das Furnier (1) eine Dicke von 0,3 bis 0,6 mm aufweist.

**11.** Interieurteil nach einem der vorhergehenden Ansprüche, **dadurch gekennzeichnet, dass** auf der der Sichtseite des Furniers (1) abgewandten Seite eine Licht reflektierende oder Licht absorbierende Schicht vorgesehen ist.

**12.** Interieurteil nach einem der vorhergehenden Ansprüche, **dadurch gekennzeichnet, dass** der Perforationsbereich so mit Öffnungen (5) versehen ist, dass bei Hinterleuchtung des Furniers (1) eine Symbolik sichtbar ist.

**13.** Interieurteil nach einem der vorhergehenden Ansprüche, **dadurch gekennzeichnet, dass** auf der der Sichtseite des Furniers (1) abgewandten Seite eine Leuchtquelle (2, 9) vorgesehen ist.

**14.** Interieurteil nach Anspruch 13, **dadurch gekennzeichnet, dass** die Leuchtquelle (2, 9) eine EL-Folie oder eine Leuchtquelle mit einer oder mehreren LEDs ist.
